# EUROPÄISCHE PATENTSCHRIFT

(11) **EP 1 604 103 B1**
(45) Veröffentlichungstag und Bekanntmachung des Hinweises auf die Patenterteilung: **30.05.2007**
(21) Anmeldenummer: 04707187.3
(22) Anmeldetag: 02.02.2004
(51) Int. Cl.: F02D 41/22, F01L 1/34

(54) **VERFAHREN ZUM BETREIBEN EINER NOCKENWELLENVERSTELLEINRICHTUNG**
METHOD FOR OPERATING A CAMSHAFT ADJUSTING DEVICE
PROCEDE PERMETTANT DE FAIRE FONCTIONNER UN DISPOSITIF DE REGLAGE D'UN ARBRE A CAMES

(30) Priorität: 06.03.2003 DE 10309717
(43) Veröffentlichungstag der Anmeldung: 14.12.2005
(73) Patentinhaber: ROBERT BOSCH GMBH, 70442 Stuttgart (DE)
(72) Erfinder: HAFFELDER, Joerg, 74906 Bad Rappenau (DE); KRANNICH, Oliver, 71732 Tamm (DE); MEZGER, Werner, 74246 Eberstadt (DE)
(86) Internationale Anmeldenummer: PCT/DE2004/000154
(87) Internationale Veröffentlichungsnummer: WO 2004/079175

(56) Entgegenhaltungen:
- EP-A- 1 363 007
- US-A- 5 529 034

## Beschreibung

Die vorliegende Erfindung betrifft ein Verfahren zum Betreiben einer Nockenwellenverstelleinrichtung. Nockenwellenverstelleinrichtungen, bei denen mittels eines Stellantriebs die Iststellung einer Nockenwelle bezüglich der Rotation der Kurbelwelle entsprechend einer in einer Steuereinheit ermittelten Sollstellung nachgeführt wird, sind allgemein bekannt.

Dabei sind prinzipiell zweierlei Arten von Nockenwellenverstelleinrichtungen bekannt. Bei der einen Art erfolgt ein von anderen Aggregaten unabhängiges Erzeugen der Nockenwellenverstellung. Hierzu können beispielsweise elektrische Nockenwellensteller verwendet werden. Die andere Art der Nockenwellenverstelleinrichtungen sind solche, bei denen die zum Erzeugen der Nockenwellenverstellung erforderliche Energie direkt von einem Nebenaggregat der Brennkraftmaschine, wie beispielsweise der Öldruckpumpe des Motorölkreislaufes, wie im Dokument US 5529034 A beschrieben, gespeist wird.

Unabhängig von der Tatsache, ob eine Nockenwellenverstelleinrichtung einen eigenen oder einen an anderweitige Einrichtungen gekoppelten Antrieb aufweist, stellt sich das Problem, dass dann, wenn eine ungenaue Regelung auftritt, zum einen das Abgasverhalten des Fahrzeugs und zum anderen auch das Fahrzeugverhalten hinsichtlich der Motorleistung und dem Ansprechverhalten ändert. Dabei ist es bekannt, dass dann, wenn eine zu große Beeinträchtigung des Abgasverhaltens der Brennkraftmaschine auftritt, eine für den Fahrer erfassbare Fehlermeldung generiert wird, welche ihn zum unverzüglichen Aufsuchen einer Werkstatt zwecks Behebung des Mangels auffordert.

Es ist Aufgabe der Erfindung, beim Auftreten von Regelabweichungen zwischen dem Sollwert für die Stellung der Nockenwelle und dem eingesteuerten Istwert eine differenziertere Reaktion zu ermöglichen.

Diese Aufgabe wird erfindungsgemäß durch ein Verfahren gemäß dem Anspruch 1 gelöst.

Bei einem Verfahren zum Betreiben einer Nockenwellenverstelleinrichtung wird mittels eines Stellantriebs die Iststellung einer Nockenwelle bezüglich der Rotation der Kurbelwelle entsprechend einer in einer Steuereinheit ermittelten Sollstellung nachgeführt. Beim Auftreten einer andauernden Regelabweichung zwischen Iststellung und Sollstellung wird ein Fehlersignal erzeugt. Gemäß der Erfindung wird das Fehlersignal in Abhängigkeit der Regelabweichung mehrstufig gestaltet, wobei den einzelnen Stufen der Fehlermeldung unterschiedliche Gewichtungen beigemessen werden. Durch diese Maßnahme können Fehlermeldungen unterschiedlicher Gewichtung verarbeitet werden. Fehler, die nicht schwerwiegend sind, aber dennoch der Beachtung bedürfen, können gesondert von schwerwiegenderen Fehlern behandelt werden.

Gemäß einer bevorzugten Ausgestaltung der Erfindung erfolgt in Abhängigkeit der Stufe der Fehlermeldung eine Information des Fahrers über das Auftreten eines Fehlers. Durch diese Maßnahme wird erreicht, dass der Verfahrer entsprechend der Stufe der Fehlermeldung differenziert über das Auftreten eines Fehlers informiert wird. Dabei ist es durchaus möglich, dass untere Stufen von Fehlermeldungen nicht zu einer Information des Fahrers führen.

Gemäß einer Ausgestaltung der Erfindung wird mit ansteigender Regelabweichung eine Stufe höherer Gewichtung erreicht. Dabei führt in vorteilhafter Weise spätestens das Erreichen der Stufe mit der höchsten Gewichtung zum Erzeugen einer vom Fahrer erfassbaren Fehlermeldung. In Ausgestaltung der Erfindung ist wenigstens eine Stufe des Fehlersignals vorgesehen, bei der eine Fehlermeldung erzeugt wird, welche in einem Fehlerspeicher auslesbar abgelegt wird, jedoch im Fahrbetrieb für den Fahrer nicht erfassbar ist. Eine solche Fehlermeldung kann insbesondere in einem Fehlerspeicher abgelegt werden, der auslesbar ist. Das Auslesen kann dabei insbesondere über ein am Fahrzeug anschließbares Diagnosegerät erfolgen. Es wird damit erreicht, dass beim Auftreten eines Fehlers, der der Wartung bedarf, die Durchführung der Wartung jedoch nicht dringend ist, bis zum nächsten Werkstattaufenthalt keine Anzeige des Fehlers erfolgt. Sobald jedoch das Anschließen eines Wartungsgerätes im Rahmen des Werkstattaufenthalts erfolgt, so wird die entsprechende Fehlermeldung angezeigt. Die entsprechende Wartungsmaßnahme kann dann durchgeführt werden. Tritt jedoch ein Fehler auf, der so gewichtig ist, dass er nicht im Rahmen eines turnusgemäßen Werkstattaufenthaltes behoben werden kann, sondern vorab der Überprüfung bedarf, so kann eine entsprechende Meldung dem Fahrer angezeigt werden und dieser zum alsbaldigen Aufsuchen einer Werkstatt aufgefordert werden. Darüber hinaus kann noch eine weitere Stufe vorgesehen werden, wobei eine Warnmeldung erzeugt wird, die vom Fahrer erfassbar ist und die ihn zum unverzüglichen Aufsuchen einer Werkstatt auffordert. Dies ist dann der Fall, wenn der Fehler so schwerwiegend ist, dass ein unverzügliches Beheben des Fehlers bzw. eine unverzügliche Analyse der Fehlerquelle erforderlich scheint. Die zweite Stufe der Fehlermeldung, wonach ein alsbaldiges Aufsuchen der Werkstatt angeraten wird, kann auch entfallen, so dass entweder lediglich stumme Fehlermeldungen erzeugt werden oder gegebenenfalls eine zum sofortigen Aufsuchen der Werkstatt auffordernde Fehlermeldung generiert wird.

Ein Fehler, der zum sofortigen Aufsuchen einer Werkstatt veranlasst, liegt bei einer Nockenwellenverstelleinrichtung insbesondere dann vor, wenn der weitere Betrieb des Fahrzeugs nicht ohne Gefährdung für das Fahrzeug selbst möglich ist. Dies ist insbesondere dann der Fall, wenn aufgrund des nicht Erreichens der Sollstellung äußerst ungünstige Verbrennungszustände auftreten. Ein derartiger Fehler kann aber auch dann vorliegen, wenn die Verbrennung bei der gegebenen Regelabweichung der Brennkraftmaschine derart ungünstig erfolgt, dass bestimmte Abgasgrenzwerte nicht mehr eingehalten werden können.

Fehler, die weniger schwerwiegend sind, also beispielsweise nur eine geringfügig verschlechterte Abgasqualität oder einen geringfügig verschlechterten Lauf der Brennkraftmaschine zur Folge haben, können dazu führen, dass ein entsprechender Fehlerwert in einem Fehlerspeicher abgelegt wird. Derartige Fehler können bei einem turnusgemäßen Werkstattaufenthalt behoben werden.

Fehler, die zum alsbaldigen aber nicht unverzüglichen Aufsuchen einer Werkstatt veranlassen, können beispielsweise darin gesehen werden, dass in den Rundlaufeigenschaften des Motors für den Fahrer bemerkbare Störungen aufgrund der Regelabweichung des Nockenwellenstellers auftreten. Dies gilt zumindest so lange, wie der Fehler nicht so schwerwiegend ist, dass ein unverzügliches Aufsuchen der Werkstatt angezeigt scheint.

Ein erfindungsgemäßes Fahrzeug weist eine Nockenwellenverstelleinrichtung auf, der eine Steuereinrichtung zugeordnet ist. Die Steuereinrichtung weist einen Rechner, beispielsweise einen Mikroprozessor, auf und ihm ist eine Speichereinrichtung zugeordnet, die wenigstens auslesbar ist. In der Speichereinrichtung ist ein von dem Rechner ausführbares Programm abgelegt, das dem Durchführen eines erfindungsgemäßen Verfahrens dient. Eine erfindungsgemäß ausgeführte Speichereinrichtung, beispielsweise eine Read-Only-Memory, ROM, weist ein auf ihr abgelegtes, auf einem Rechner, wie einem Mikroprozessor ausführbares Computerprogramm auf, das dem Durchführen eines erfindungsgemäßen Verfahrens dient.

Im Übrigen ist die Erfindung nachfolgend anhand des in der Zeichnung dargestellten Ausführungsbeispiels näher erläutert; dabei zeigt:
- Fig. 1: Flussdiagramm eines erfindungsgemäßen Verfahrens; und
- Fig. 2: die schematische Darstellung eines erfindungsgemäß ausgestalteten Fahrzeugs.

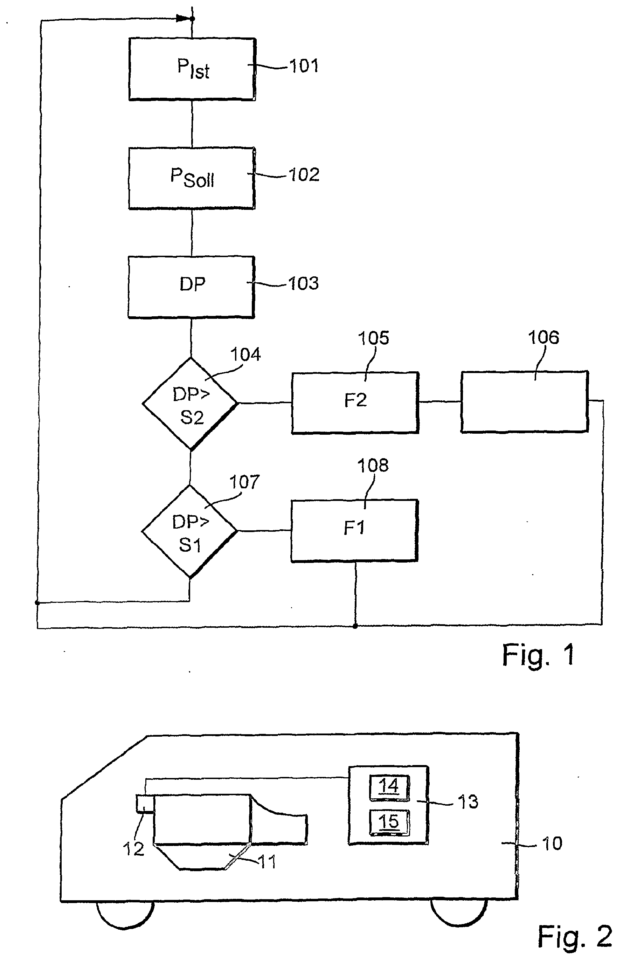

Die Fig. 1 zeigt das Flussdiagramm eines erfindungsgemäßen Verfahrens. Bei dem in der Fig. 1 gezeigten Verfahren werden dabei zwei Stufen der Fehlermeldung voneinander unterschieden.

Gemäß dem Schritt 101 des Verfahrens wird zunächst der Wert für die Iststellung der Nockenwelle P_{Ist} bezüglich der Kurbelwelle erfasst und zugeführt. Anschließend wird gemäß dem Schritt 102 der Sollwert für die Position des Nockenwellenstellers P_{Soll} zugeführt. Im Schritt 103 des Verfahrens wird daraus die Regelabweichung DP ermittelt. Gemäß dem Schritt 104 des Verfahrens wird dann überprüft, ob die Regelabweichung DP größer ist als ein zweiter Schwellenwert F2. Dieser zweite Schwellenwert ist die Schwelle für das Überschreiten zur Stufe eines Fehlers höherer Gewichtigkeit. Es wird in dem Verfahren also zunächst überprüft, ob ein Fehler höchster Gewichtung vorliegt, der sich in der Regel durch die größte Regelabweichung DP auszeichnet. Ist dies der Fall, so wird gemäß dem Schritt 105 des Verfahrens ein dementsprechendes Fehlersignal F2 generiert. Anschließend wird gemäß dem Schritt 106 des Verfahrens die Fehlermeldung über eine Ausgabeeinheit ausgegeben. Die Ausgabeeinheit erzeugt insbesondere ein vom Fahrer wahrnehmbares Warnsignal, beispielsweise das Anzeigen einer optisch erfassbaren Warnmeldung. Anschließend wird zum Schritt 101 gesprungen.

Wurde im Schritt 104 nicht festgestellt, dass der Schwellenwert S2 überschritten wurde, so wird zum Schritt 107 übergegangen und überprüft, ob die Regelabweichung DP einen ersten Schwellenwert übersteigt, wobei der erste Schwellenwert dem Erreichen einer ersten Fehlerstufe ausgebildet ist. Ist die erste Schwelle nicht überschritten, so wird von einem ordnungsgemäß arbeitenden Nockenwellensteller ausgegangen und es wird zum Schritt 101 gesprungen. Andernfalls wird gemäß dem Schritt 108 eine erste Fehlermeldung für das Erreichen der ersten Fehlerstufe erzeugt und diese Fehlermeldung, beispielsweise in Verbindung mit weiteren Informationen über den Zustand des Nockenwellenstellers oder der Brennkraftmaschine insgesamt in einem Fehlerspeicher abgelegt. Der Fehlerspeicher ist ein vorzugsweise nichtflüchtiger Speicher, der beschreibbar ist und über eine externe Einrichtung, die beispielsweise mit einem Datenbus im Fahrzeug verbindbar ist, ausgelesen werden kann.

Die Fig. 2 zeigt in schematischer Darstellung ein Fahrzeug 10, das eine Brennkraftmaschine aufweist. Die Brennkraftmaschine verfügt über einen Nockenwellensteller 12 zum Verstellen der Relativlage der Nockenwelle bezüglich der Drehbewegung der Kurbelwelle. Der Nockenwellensteller 12 wird dabei durch eine Steuereinrichtung 13 angesteuert, die einen Rechner 14 beinhaltet, der das Steuerprogramm für die Ansteuerung des Nockenwellenstellers ausführt und auch das erfindungsgemäße Prüfverfahren durchführt. Hierzu ist in einem Speicher 15 der Steuereinrichtung 13 ein Computerprogramm abgelegt, das auf dem Mikroprozessor 14 ausführbar ist.

## Patentansprüche

1. Verfahren zum Betreiben einer Nockenwellenverstelleinrichtung, wobei mittels eines Stellantriebs die Iststellung einer Nockenwelle bezüglich der Rotation der Kurbelwelle entsprechend einer in einer Steuereinheit ermittelten Sollstellung nachgeführt wird und bei einem Vorliegen einer Regelabweichung zwischen Iststellung und Sollstellung ein Fehlersignal in Abhängigkeit der Regelabweichung (DP) mehrstufig ausgebildet ist, wobei den einzelnen Stufen der Fehlermeldung (F1, F2) unterschiedliche Gewichtungen beigemessen werden.

2. Verfahren nach Anspruch 1,
**dadurch gekennzeichnet,**
**dass** in Abhängigkeit der Stufe der Fehlermeldung (F1, F2) eine Information des Fahrers über das Auftreten eines Fehlers erfolgt.

3. Verfahren nach einem der Ansprüche 1 oder 2,
**dadurch gekennzeichnet,**
**dass** mit ansteigender Regelabweichung (DP) eine Stufe höherer Gewichtung erreicht wird.

4. Verfahren nach einem der vorangegangenen Ansprüche,
**dadurch gekennzeichnet,**
**dass** spätestens beim Erreichen der Stufe mit der höchsten Gewichtung eine vom Fahrer erfassbare Fehlermeldung (F2) generiert wird.

5. Verfahren nach einem der vorangegangenen Ansprüche,
**dadurch gekennzeichnet,**
**dass** in Abhängigkeit der Stufe der Gewichtung voneinander verschiedene vom Fahrer erfassbare Fehlermeldungen (F1, F2) erzeugt werden, wobei spätestens beim Erreichen der Stufe mit der höchsten Gewichtung eine Fehlermeldung (F2) erzeugt wird, die zum unverzüglichen Aufsuchen einer Werkstatt auffordert.

6. Verfahren nach einem der vorangegangenen Ansprüche,
**dadurch gekennzeichnet,**
**dass** wenigstens eine Stufe existiert, bei der eine Fehlermeldung (F1) erzeugt wird, die in einem Fehlerspeicher auslesbar abgelegt, jedoch nicht für den Fahrer im Fahrbetrieb erfassbar ist.

7. Fahrzeug mit einer Nockenwellenverstelleinrichtung, der eine Steuereinrichtung zugeordnet ist, wobei die Steuereinrichtung (13) einen Rechner (14) aufweist, dem eine Speichereinrichtung (15) zugeordnet ist,
**dadurch gekennzeichnet,**
**dass** in der Speichereinrichtung (15) ein auf dem Rechner (14) ausführbares Programm zum Durchführen eines Verfahrens gemäß einem der vorstehenden Ansprüche abgelegt ist.

8. Speichereinrichtung mit einem darauf abgespeicherten, auf einem Rechner, wie einem Mikroprozessor ausführbaren Programm zum Ausführen eines Verfahrens gemäß einem der Ansprüche 1 bis 6.

## Claims

1. Method for operating a camshaft adjusting device, with the actual position of a camshaft in relation to the rotation of the crankshaft being tracked according to a setpoint position, which is determined in a control unit, by means of an actuating drive and, when there is a control deviation between the actual position and the setpoint position, a fault signal being formed with multiple stages as a function of the control deviation (DP), with the individual stages of the fault message (F1, F2) being ascribed different weightings.

2. Method according to Claim 1, **characterized in that** the driver is informed of the occurrence of a fault as a function of the stage of the fault message (F1, F2).

3. Method according to either of Claims 1 and 2, **characterized in that** a stage with a higher weighting is reached as the control deviation (DP) increases.

4. Method according to one of the preceding claims, **characterized in that** a fault message (F2) which can be detected by the driver is generated at the latest when the stage with the highest weighting is reached.

5. Method according to one of the preceding claims, **characterized in that** fault messages (F1, F2) which differ from one another and can be detected by the driver are produced as a function of the stage of the weighting, with a fault message (F2) which advises that an immediate visit to a workshop is required being produced at the latest when the stage with the highest weighting is reached.

6. Method according to one of the preceding claims, **characterized in that** there is at least one stage in which a fault message (F1) is produced which is stored in a fault memory such that it can be read-out but cannot be detected by the driver in the driving mode.

7. Vehicle having a camshaft adjusting device which has an associated control device, with the control device (13) having a computer (14) which has an associated memory device (15), **characterized in that** a program for carrying out a method according to one of the preceding claims, which program can be executed on the computer (14), is stored in the memory device (15).

8. Memory device comprising a program for executing a method according to one of Claims 1 to 6, which program is stored in the said memory device and can be executed on a computer, for example a microprocessor.

## Revendications

1. Procédé de fonctionnement d'un dispositif de réglage d'un arbre à cames selon lequel, un entraînement de réglage, effectue le positionnement réel d'un arbre à cames par rapport à la rotation du vilebrequin en correspondance avec une position de consigne établie dans un dispositif de commande, la présence d'un écart de réglage entre la position réelle et la position de consigne créant un signal de défaut multi-étagé en fonction de l'écart de réglage (DP),
selon lequel
on attribue aux différents étages de l'information de défaut (F1, F2) des pondérations différentes.

2. Procédé selon la revendication 1,
**caractérisé en ce qu'**
en fonction de l'étage de l'information de défaut (F1, F2), une information est délivrée au conducteur sur la survenance d'un défaut.

3. Procédé selon la revendication 1 ou 2,
**caractérisé en ce que**
quand l'écart de réglage (DP) augmente, un étage de pondération plus élevé est atteint.

4. Procédé selon une des revendications précédentes,
**caractérisé en ce qu'**
une information de défaut (F2) pouvant être saisie par le conducteur, est générée au plus tard quand est atteint l'étage présentant la pondération la plus élevée.

5. Procédé selon une des revendications précédentes,
**caractérisé en ce qu'**
en fonction de l'étage de pondération, ont produit des informations de défaut (F1, F2) différentes l'une de l'autre et perceptibles par le conducteur, et c'est au plus tard quand est atteint l'étage à pondération la plus élevée qu'est produite une information de défaut (F2) qui impose de se rendre sans retard à un atelier.

6. Procédé selon une des revendications précédentes,
**caractérisé en ce qu'**
il existe au moins un étage auquel on produit une information de défaut (F1) déposée de manière lisible dans une mémoire de défauts, mais qui ne peut être saisie par le conducteur pendant la circulation du véhicule.

7. Véhicule automobile équipé d'un dispositif de réglage d'un arbre à cames auquel est associé un dispositif de commande (13) comprenant un calculateur (14) auquel est associé un dispositif d'enregistrement (15),
**caractérisé en ce que**
le dispositif d'enregistrement (15) contient un programme pouvant être utilisé par le calculateur (14) pour mettre en oeuvre un procédé selon une des revendications précédentes.

8. Dispositif d'enregistrement avec, stocké dans celui-ci, un programme de mise en oeuvre d'un procédé selon une des revendications 1 à 6, qui peut être exécuté par un calculateur, par exemple un microprocesseur.
